# EUROPÄISCHE PATENTSCHRIFT

(11) **EP 4 147 439 B1**
(45) Veröffentlichungstag und Bekanntmachung des Hinweises auf die Patenterteilung: **03.07.2024**
(21) Anmeldenummer: 22730376.5
(22) Anmeldetag: 17.05.2022
(51) Int. Cl.: H04L 65/75, H04L 65/61

(54) **KOMMUNIKATIONSSYSTEM UND VERFAHREN ZUR KOMMUNIKATION ZWISCHEN WENIGSTENS ZWEI ORTEN**
COMMUNICATIONS SYSTEM AND METHOD FOR COMMUNICATING BETWEEN AT LEAST TWO LOCATIONS
SYSTÈME DE COMMUNICATION ET PROCÉDÉ DE COMMUNICATION ENTRE AU MOINS DEUX EMPLACEMENTS

(30) Priorität: 18.05.2021 DE 102021002601
(43) Veröffentlichungstag der Anmeldung: 15.03.2023
(73) Patentinhaber: Rappsilber, Patrick, 80637 München (DE)
(72) Erfinder: Rappsilber, Patrick, 80637 München (DE)
(74) Vertreter: Leinweber & Zimmermann
(86) Internationale Anmeldenummer: PCT/EP2022/063343
(87) Internationale Veröffentlichungsnummer: WO 2022/243328

(56) Entgegenhaltungen:
- US-A1- 2014 104 378
- US-A1- 2020 043 133

## Beschreibung

Die Erfindung betrifft ein Kommunikationssystem, und erweitert auch Sicherheitssysteme sowie Lern- und/oder Trainingssysteme. Insbesondere betrifft die Erfindung ein Kommunikationssystem mit einer an einem ersten Ort Bilder aufnehmende und daraus Bilddaten generierenden Bildaufnahmevorrichtung, einer die generierten Bilddaten von dem ersten Ort über einen Übertragungsweg zu einem von dem ersten Ort fernen zweiten Ort übertragenden Datenübertragungsvorrichtung, einer die übertragenen Bilddaten am zweiten Ort empfangenden ersten Empfangsvorrichtung, sowie insbesondere einer zum Empfangen eines Feedback-Signals am ersten Ort vorgesehenen zweiten Empfangsvorrichtung.

Derartige Kommunikationssysteme sind selbstverständlich gut bekannt und dienen der Kommunikation zwischen zwei Orten, in der wenigstens eine Bildinformation zum Tragen kommt, die ein Bild in der Umgebung des ersten Orts darstellt, welches Bild an den zweiten Ort ausgestrahlt werden soll, beispielsweise auf einem Bildschirm.

Ein typisches solches Kommunikationssystem ist das Fernsehen, beispielsweise eine Live-Übertragung eines Sportereignisses. Hier werden am ersten Ort, beispielsweise einer Sportarena, Bilder von wenigstens einer Kamera, üblicherweise mehreren Kameras aus unterschiedlichen Blickwinkeln, auf das Arenainnere, aufgenommen und ausgestrahlt, nicht nur auf die Fernsehgeräte in den einzelnen Haushalten, sondern auch in das Fernsehstudio. Am Ort der Live-Übertragung, etwa der Sportarena, können zudem Rückmeldungen, etwa in Form von Rückfragen, zum ersten Ort geschickt werden, etwa Fragen, die beispielsweise ein Kommentar vor Ort beantwortet. Zahlreiche vergleichbare und ähnliche Kommunikationssysteme sind gut bekannt. Die Dokumente US 2020/043133 A1 und US 2014/104378 A1 beschreiben verwandte Systeme aus dem Stand der Technik.

So können derartige Kommunikationssysteme beispielsweise auch bei der Bekämpfung von Gefahrensituationen eingesetzt werden, in denen Bildaufnahmen vom Gefahrenort an eine Einsatzzentrale übermittelt und von dort aus Einsatzkräfte am Gefahrenort instruiert werden.

Es hat sich jedoch herausgestellt, dass z.B. bei der Bekämpfung derartiger Gefahrensituationen nicht immer optimale Ergebnisse erzielt werden, die nicht zuletzt auf unzulänglicher Kommunikation beruhen.

Der Erfindung liegt die Aufgabe zugrunde, ein Kommunikationssystem der eingangs genannten Art im Hinblick auf einen vernünftigen Kompromiss aus Zuverlässigkeit, Informationsgehalt und Übertragungszeiten zu verbessern.

Diese Aufgabe wird von der Erfindung gelöst durch ein Kommunikationssystem gemäß Anspruch 1, welches dadurch gekennzeichnet ist, dass der wenigstens eine Übertragungsweg ein aus einer Mehrzahl von auswählbaren Übertragungswegen ausgewählter Übertragungsweg ist und die am zweiten Ort vorliegenden Bilddaten in Echtzeit zum zweiten Ort übertragene, von einer Bildsynthesevorrichtung aus wenigstens zwei von jeweils einer von wenigstens zwei Kameras der Bildaufnahmevorrichtung zum gleichen Zeitpunkt generierten Einzelbilddaten synchronisiert zusammengesetzte und das Bild eines bezüglich eines gemeinsamen Zentrums der wenigstens zwei die Einzelbilddaten generierenden Kameras durch einen auf die Schwererichtung bezogenen Horizontalwinkelbereich (Δϕ) von wenigstens 7π/6 sowie einen insbesondere die Horizontale (π/2) umfassenden Vertikalwinkelbereich (Δϑ) von wenigstens π/3 aufgespannten Raumwinkelbereich (Ω_{g}) darstellende Gesamtbilddaten sind, wobei die radial äußerste Linse der jeweiligen Kamera nicht weiter als 40 cm von dem gemeinsamen Zentrum entfernt ist.

So ist herausgefunden worden, dass beispielsweise Fehlanweisungen und Missverständnisse in der Kommunikation wenigstens teilweise darauf zurückzuführen sind, dass am zweiten Ort (z.B. der Einsatzzentrale) ein anderer Blickwinkel bzw. nicht der Gesamteindruck vom Geschehen am Gefahrenort vermittelt ist, welche die Einsatzkraft vor Ort erfährt. Dies gilt auch beim herkömmlichen Einsatz mehrerer Kameras.

Bei der erfindungsgemäßen Gestaltung weisen wenigstens zwei Kameras jedoch ein gemeinsames Zentrum auf, und geben somit die Situation am Einsatzort realistischer wieder, und zudem in einem größeren Bereich, insbesondere situationsbedingt wesentliche Bereiche des gesamten Raums abdeckenden Raumwinkelbereich. Indem die Gesamtbilddaten diesen größeren, von einer einzelnen Kamera gar nicht bereitstellbaren Raumwinkelbereich abdecken und zudem insbesondere nicht erst am zweiten Ort aus übertragenen Einzelbilddaten zusammengesetzt werden müssen, soweit das Zusammensetzen der Gesamtbilddaten aus den Einzelbilddaten durch die Bildsynthesevorrichtung bevorzugt noch vor der Übertragung selbst aber dennoch in Echtzeit stattfindet, stehen am zweiten Ort die Gesamtbilddaten als Raumbilddaten zur Verfügung. In diesem Sinne wird nicht nur ein Bild übertragen, sondern räumlich der ausgehend von einem Zentrum gesehene Raumwinkelbereich, insbesondere der gesamte Raum, bzw. der Raum aus einzeln übertragenen Daten am zweiten Ort zusammengesetzt. Innerhalb des durch den abgedeckten Raumwinkelbereich gebildeten Raums kann am zweiten Ort ein Teilausschnitt navigiert werden, wie auch der gesamte abgedeckte Raumwinkelbereich angezeigt werden kann. Zudem ist die radial äußerste Linse der jeweiligen Kamera nicht weiter als 40 cm von dem gemeinsamen Zentrum (der jeweiligen Blickfelder der Kameras der Bildaufnahmevorrichtung) entfernt. Dadurch ergibt sich ein günstiger Kompromiss aus Bildqualität, physikalischer Optik und niedriger Erstellungszeit für die Erzeugung des Gesamtraumbilds (digitalen Raums).

Des weiteren wird die Aufgabe der Erfindung durch ein Verfahren gemäß Anspruch 15 gelöst.

Weitere bevorzugte Ausgestaltungen sind in den abhängigen Ansprüchen angegeben.

Die Synthese könnte am zweiten Ort oder wenigstens teilweise am zweiten Ort erfolgen; besonders bevorzugt erfolgt sie jedoch insbesondere vollständig am ersten Ort. Die Bildsynthesevorrichtung kann hierzu über ein internes Netzwerk mit insbesondere Gbit Leistungsfähigkeit mit der Bildaufnahmevorrichtung verbunden sein. Da bevorzugt das (bis auf die unten angegebenen geringen Wegschnitte am Rand der zweidimensionalen Anzeige) gesamte, von der Bildaufnahme erfasste und synthetisierte Abbild des aufgenommenen Raumwinkelbereichs gleichzeitig angezeigt werden soll, wird für die Übertragung (anders als bei herkömmlichen Panorama-Übertragungstechniken mit höherer Priorität eines "Field of View" oder "View of Interest" des mit VR-Brille ausgestatteten Endnutzers und anderem Übertragungsweg niedrigerer Priorität in Winkelbereichen "out of Interest") bevorzugt kein Teilausschnitt priorisiert, sondern die den ganzen aufgenommenen Raumwinkelbereich abbildenden Bilddaten werden als ein gemeinsames Paket gleicher Priorität als einheitlicher Datenstrom der Übertragung übergeben und als solcher einheitlicher Datenstrom übertragungsseitig an den Empfänger übergeben (unabhängig von einer ggf. übertragungstechnisch in einzelnen Datenpaketen gepackt erfolgenden Übertragung).

In diesem Zusammenhang wird es bevorzugt, dass der Horizontalwinkelbereich des Raumwinkelbereichs auch wenigstens 4rr/3, bevorzugt 3π/2, insbesondere wenigstens 7π/4 oder auch den gesamten Horizontalwinkelbereich von 2π umfasst.

Am ersten Ort kann die Bildübertragungsvorrichtung als mobile Einrichtung im laufenden Betrieb zwischen verschiedenen Stellen am ersten Ort positionsveränderbar sein.

Hinsichtlich des Vertikalwinkelbereichs von wenigstens π/3 ist bevorzugt vorgesehen, dass dieser wenigstens π/2, insbesondere wenigstens 2π/3 beträgt, wobei auch hier an den gesamten Vertikalwinkelbereich von π gedacht werden kann. In diesem Falle wäre bei Kombination mit einem Horizontalwinkelbereich von 2π der gesamte Raumwinkelbereich Ω von 4π umfasst.

Das erfindungsgemäße Übertragungssystem ist zudem zuverlässiger und auch ausfallsicherer, da es sich nicht auf einen einzigen Übertragungsweg stützen muss, sondern unter einer Mehrzahl von wenigstens zwei auswählbaren Übertragungswegen den geeigneteren Übertragungsweg auswählen kann. Dabei kann auch eine Mehrzahl von Übertragungswegen parallel genutzt werden.

In diesem Zusammenhang ist bevorzugt vorgesehen, dass die Mehrzahl von auswählbaren Übertragungswegen wenigstens zwei aus der Gruppe LTE, SAT, WLAN, LAN und Festnetzleitung umfasst, darunter bevorzugt wenigstens LTE und/oder SAT, bevorzugt wenigstens LTE und SAT.

Ebenfalls in diesem Zusammenhang ist bevorzugt vorgesehen, dass eine die Auswahl treffende Auswahleinrichtung nach einem oder mehreren vorgegebenen Kriterien auswählt, wobei ein vorgegebenes Kriterium wenigstens eines aus aktuell erreichbarer Übertragungsrate und Übertragungszeit besteht, bevorzugt auf beide Kriterien prüft. In einer weiteren bevorzugten Gestaltung ist beim Auswählen die Sicherstellung einer Mindestübertragungsrate innerhalb einer noch akzeptablen Übertragungszeit vorrangig gegenüber einer minimierten Übertragungszeit. Bevorzugt werden die Bilddaten zeitkontinuierlich übertragen (eine Betriebsart), es wird jedoch auch an Sequenzen von in einer anderen Betriebsart zeitlich getrennt aufgenommenen Bildern gedacht, insbesondere mit änderbar einstellbarem Zeitintervall zwischen zwei Aufnahmen. Bevorzugt erfolgt eine Einstellung der einen oder anderen Betriebsart insbesondere automatisch in Abhängigkeit der verfügbaren Bandbreite des/der ausgewählten Übertragungswegs(/-wege).

In diesem Zusammenhang wird es bevorzugt, dass die Übertragungsrate der Gesamtbilddaten wenigstens 5 Mbit/s, bevorzugt wenigstens 10 Mbit/s, weiter bevorzugt wenigstens 20 Mbit/s, sogar wenigstens 30 Mbit/s, insbesondere sogar 40 Mbit/s beträgt. Andererseits wird durchaus auch an Übertragungen der Gesamtbilddaten mit einer Übertragungsrate von weniger als 20 Mbit/s, sogar weniger als 10 Mbit/s gedacht, um eine höhere Ausfallsicherheit trotz einer gewünschten Minimalübertragungsrate von z.B wenigstens 5 Mbit/s zu realisieren. Insoweit kann es in einer weiteren Betriebsart zu einer gezielten Drosselung übertragener Daten kommen, die per natura in einer höhere Übertragungen ausfüllenden Art zur Verfügung stehen.

In diesem Zusammenhang wird es ebenfalls bevorzugt, dass die Bildsyntheseeinrichtung eine Komprimierung der Bilddatendichte (Bilddatenmenge pro Raumwinkelelement) jedenfalls in einer nochmals weiteren Betriebsart in Abhängigkeit der von der Datenübertragungsvorrichtung als erreichbare Übertragungsrate signalisierten Information erfolgt. Hinsichtlich der Komprimierungsverfahren wird an derzeitige Standards H265/H264 gedacht, jedoch auch an in Entwicklung befindlicher H266 und/oder deren Nachfolger.

Insbesondere solange eine ausreichende Datenübertragungsrate verfügbar ist, wird es bevorzugt, dass die übertragenen Bilddaten in einer eine Auflösung am zweiten Ort bei dessen Bilddarstellung auf einem Bildschirm erlaubende Auflösung von wenigstens 4k, bevorzugt wenigstens 6k, insbesondere wenigstens 8k oder höher erlaubt, insbesondere sogar 10k oder höher oder 12k oder höher. Es ist vorgesehen, dass auch eine Ansteuerung/Auswahl der Auflösung in Abhängigkeit von der erreichbaren Übertragungsrate erfolgt, wenigstens in einem auswählbaren Betriebsmodus.

Im Rahmen der Erfindung ist unter dem Ausdruck "Echtzeit" zu verstehen was sich hinsichtlich Live-Übertragungen oder wenigstens Pre-Live Übertragungen an technisch üblichem orientiert, was Zeitverzögerungen von einigen Sekunden (Live) bzw. Zeitfenster von bis zu einer Stunde (Pre-Live) durchaus beinhalten kann. In diesem Zusammenhang ist vorgesehen, dass die Bildsyntheseeinrichtung für das Zusammensetzen der Gesamtbilddaten eine Zeit von weniger als 3 Sekunden, bevorzugt weniger als 2,5 Sekunden, insbesondere weniger als 2 Sekunden benötigt. Es versteht sich, dass auch noch geringere Zeiten wie weniger als 1,5 Sekunden bis hin zu weniger als 1 Sekunde bevorzugt werden, jeweils für Live-Anwendungen. Für Pre-Live Anwendungen ist auch vorgesehen, dass insbesondere zum Erreichen einer höheren Bildqualität auch Verarbeitungszeiten der Bildsynthese in den Minutenbereich hineingehen, bevorzugt aber weniger als 40 min, insbesondere weniger als 20 min betragen.

In einer bevorzugten Ausführungsform erfolgt die Anzeige des Bildes am zweiten Ort, etwa über die weiter unten beschriebene Anzeigevorrichtung, innerhalb von 45 Minuten nach der Bildaufnahme am ersten Ort, weiter bevorzugt innerhalb von 30 Minuten. Weiter bevorzugt ist die Bildanzeige nicht später als 10 Minuten, weiter bevorzugt nicht später als 5 Minuten nach Bildaufnahme; es ist jedoch auch vorgesehen, dass die Anzeige des Bildes am zweiten Ort über die Anzeigevorrichtung, innerhalb von nur Sekunden, bevorzugt innerhalb von 10 Sekunden nach der Bildaufnahme am ersten Ort erfolgt, weiter bevorzugt innerhalb von 5 Sekunden, selbst innerhalb von 4, 3 oder nur 2 Sekunden oder weniger. Bei längeren Zwischenzeiten können Zeitfenster genutzt werden, um die Bilder durch ergänzende Bild-/und/oder Textinformationen zu ergänzen.

Mit einer am ersten Ort bevorzugt vorgesehenen Empfangseinrichtung kann auch ein Feedback zum ersten Ort gelangen, welches bereits eine Reaktion auf die Raumbilddaten, z.B. jedenfalls einem Teil davon, darstellen kann.

Techniken, die beim Zusammensetzen der Gesamtbilddaten aus den Einzelbilddaten zum Einsatz kommen können, umfassen z.B. Open Source Programme, die Gesamtbilder aus z.B. 2-8 Einzelkamera-Bilddaten zusammensetzen, bevorzugt mit High-End Technologie hinsichtlich Graphik- und Prozessortechnologie (z.B. Intel Core) sowie interner Gbit Netzwerkverbindung. Es können auch Mehrkamerasysteme zum Einsatz kommen, mit konfigurierbarer Datenausgabeoptionen. Bevorzugt werden diese in Abhängigkeit verfügbarer Bandbreite angesteuert.

Am zweiten Ort ist bevorzugt wenigstens eine Anzeigevorrichtung vorgesehen, auf der das Gesamtbild oder ein Teil davon anzeigbar ist. In einer besonders bevorzugten Gestaltung ist eine räumliche Anzeige, auch in Form eines Großbildschirms vorgesehen, mit bevorzugt räumlicher Anzeigefläche und einer Vertikalausdehnung von bevorzugt mehr als 1,20 m, insbesondere als 1,60 m und/oder einer Horizontalausdehnung von bevorzugt wenigstens 2 m, insbesondere wenigstens 3 m. Als Anzeigetechnik können gängige Anzeigetechniken/Bildschirmtechniken herangezogen werden. In einer besonders bevorzugten Gestaltung kann jedoch auch vorgesehen werden, dass das Bild über einen Beamer (insbesondere VR-Beamer mit 180 Grad Blickwinkel) der Anzeigevorrichtung auf eine bevorzugt räumliche Projektionsfläche der Anzeigevorrichtung projiziert wird. In diesem Fall kann die Projektionsfläche selbst z.B. lediglich durch eine räumliche Wand oder Leinwand gebildet sein. "Räumlich" bedeutet in diesem Zusammenhang, dass die Flächennormalen von einer einheitlichen Richtung in konvergierender Richtung abweichen und insbesondere auf ein gemeinsames Zentrum der Anzeigevorichtung hin gerichtet sind, und bevorzugt stetig ineinander übergehen.

Das gemeinsame Zentrum kann der (VR-)Beamer/Lichtprojektor bzw. dessen Strahlausgang sein. Es werden Ausführungen bevorzugt, bei denen das auf die Anzeige projektierte Bild von nur genau einem einzigen Lichtprojektor erzeugt wird, weiter bevorzugt über eine einzige Linse, etwa eine Weitwinkellinse. Die hierfür eingesetzte bildgebende Steuereinheit steuert die bildgebende Optik, bevorzugt ein durchleuchtetes Display. Die Lichtquelle des Projektors hat bevorzugt 2500 Lumen oder mehr, weiter bevorzugt wenigstens 3000 Lumen, insbesondere wenigstens 3500 Lumen.

In einer bevorzugten Ausführungsform ist die räumliche Ausdehnung der Anzeigefläche, auf die das aufgenommene, den Raumwinkelbereich abbildendes Bild projiziert wird, derart, dass die Lichtlaufstrecke zur Anzeigefläche ausgehend von dem Abstand des Lichtprojektors von dem Zentrum der Anzeigefläche entlang einer ersten Erstreckungsrichtung mit überwiegend orthogonal zur Vertikalen verlaufenden Richtung zentrumsnah zunächst ansteigt um dann zentrumsfern wieder abzusinken, und/oder die Lichtlaufstrecke zur Anzeigefläche ausgehend von dem Abstand des Lichtprojektors von dem Zentrum der Anzeigefläche entlang einer zweiten Erstreckungsrichtung mit überwiegend orthogonal zur Horizontalen verlaufenden Richtung zentrumsnah zunächst ansteigt um dann zentrumsfern wieder abzusinken. Dadurch verstärkt sich der Eindruck des Betrachters der Anzeige, sich am ersten Ort zu befinden. Der Abstand sollte bevorzugt wenigstens 2m, weiter bevorzugt wenigstens 3m betragen.

Die Räumlichkeit der Anzeige(fläche) ist sowohl in horizontaler Richtung (Azitmutal, ϕ) als auch in vertikaler Richtung (Polar, ϑ) gegeben. Die Anzeigefläche kann planare Flächen beinhalten, aber auch gekrümmte Flächenbereiche beinhalten, insbesondere überwiegend oder vollständig. Bei gekrümmten Flächen wird eine stärkere Krümmung (oder gemittelte Krümmung) in polarer Richtung als in azimutaler Richtung bevorzugt, um bevorzugt wenigstens 8%, weiter bevorzugt wenigstens 12%, insbesondere wenigstens 16%. Die Anzeigefläche könnte jedoch auch insgesamt sphärisch ausgebildet sein.

Es wird bevorzugt, dass selbst bei Vorhandensein von 4π Raumbilddaten in Horizontalrichtung nicht mehr als 350°, insbesondere nicht mehr als 340° gleichzeitig angezeigt werden, um einen Orientierungspunkt im Raum für den Betrachter am zweiten Ort zu schaffen, wenn z.B. die VR-Beamer Technik eingesetzt wird. Diese dann gleichzeitig in Horizontalrichtung angezeigten etwa 340° oder mehr stellen eine bevorzugte Ausführungsform dar, es wird auch an Varianten gedacht, bei denen weniger, jedoch mindestens 150°, bevorzugt wenigstens 210°, weiter bevorzugt wenigstens 270° angezeigt werden. In Vertikalrichtung wird ein Maximalwinkelbereich von 170°, bevorzugt 160° vorgesehen. Diese dann gleichzeitig in Vertikalrichtung angezeigten etwa 160° oder mehr stellen eine bevorzugte Ausführungsform dar, es wird auch an Varianten gedacht, bei denen weniger, jedoch mindestens 70°, bevorzugt wenigstens 100°, weiter bevorzugt wenigstens 130° angezeigt werden. Die zur Bildung des Orientierungspunkts abgeschnittenen Bildwinkelbereiche können auch nur wenige Grad betragen, etwa nicht mehr als zwei, vier oder sieben Grad, horizontal und/oder vertikal.

Bevorzugt ist über eine Beamer-Ansteuerung eine Zoomfunktion vorgesehen, in der das projizierte Bild auf einen geringeren Raumwinkelbereich abstellt, mit ggf. entsprechender Vergrößerung. Die Blickrichtung für den Betrachter ist ebenfalls änderbar einstellbar, durch ein Verschwenken des projizierten Bilds. Diese Funktionen sind bevorzugt kombiniert realisiert. Damit wird es dem Betrachter am zweiten Ort möglich im Wesentlichen den Blickwinkel eines ausgewählten Beobachters/Beobachterposition am ersten Ort einzunehmen. Angezeigt werden kann somit ein auswählbarer Abschnitt des digital verfügbaren Raums, insbesondere 4π-Raums, welcher insbesondere im Raum wandern kann, etwa durch Schwenken. Es ist für die bildgebende Steuereinheit bevorzugt auch eine Kalibrierfunktion vorgesehen, mit der die projizierten Bilder mittels der Steuereinheit zur Verfügung gestellt Informationen über geometrische-/Formeigenschaften der räumlichen Anzeige(fläche) an diese Anzeige angepasst werden. Die Kalibrierfunktion kann Kalibrierprojektionen projektieren, insbesondere einschließlich Kalibrierpunkten und/oder Kalibrierlinien, die auf der Anzeige erscheinen. Letztere können durch Verschiebung mit den Formeigenschaften, etwa Kanten oder Ecken, der Anzeige abgeglichen werden bzw. auf Übereinstimmung gelegt und so die Kalibrierung eingestellt werden. Auf diese Weise kann ein möglichst verzerrungsfreieres Bild der Raumdaten auf der räumlichen Anzeige realisiert werden.

Wie bereits oben gesagt, kann eine Wand die Anzeigefläche bilden. Bevorzugt erstreckt sich die Anzeigefläche dann noch (diese Wand im Folgenden als Frontwand bezeichnend) in eine, besonders bevorzugt beide angrenzenden Seitenwände hinein. Weiter bevorzugt erstreckt sich die Anzeigefläche dann noch in die angrenzende Decke, besonders bevorzugt auch noch in den angrenzenden Boden hinein. Die Seitenwände könnten feste Wände oder separat aufgestellte Trennwände sein.

In einer weiteren bevorzugten Gestaltung sind am zweiten Ort noch einer oder mehrere Bildschirme, etwa in Form von Computerterminals und/oder Tablets vorgesehen. In einer bevorzugten Ausgestaltung verfügt die entsprechende Ansteuerung über die vollen Gesamtbilddaten. In einer möglichen Ausführungsform kann das Gesamtbild auf dem Bildschirm insgesamt bzw. nahezu insgesamt dargestellt werden, mit einer entsprechenden Stauchung in Vertikal- und/oder Horizontalrichtung, im Sinne, dass der Blickwinkelbereich des Betrachters hinsichtlich des jeweiligen Winkels ein geringerer Winkel ist als der des Horizontal- bzw. Vertikalwinkelbereichs der Gesamtbilddaten. In einer möglichen Ausführungsform ist ein entsprechender Stauchungsfaktor größer als 1,2, bevorzugt größer als 1,4, insbesondere größer als 1,6. Auf den Bildschirmen können anzeigesteuerungstechnisch die oben anhand des VR-Beamers erläuterten Funktionen (Zoom, Schwenken) ebenfalls vorhanden sein. In einer bevorzugten Ausführungsform sind wenigstens 2 Bildschirme vorhanden, auf denen zur gleichen Aufnahmezeit gehörige Bilder aus unterschiedlichen Blickwinkeln und/oder unterschiedliche Raumwinkelbereiche des verfügbaren Gesamtraums angezeigt werden.

Des Weiteren ist, wie auch bereits erläutert, bevorzugt vorgesehen, dass der wenigstens eine Bildschirm eine Zoom-Funktion aufweist, um sich einzelne Teilbereiche des Gesamtbilds in Vergrößerung darstellen zu lassen. Die Steuerung ist in einer anderen Betriebsart ebenfalls dazu ausgelegt, den Teilausschnitt des Gesamtbildes in vollem Gesamtbild wandern zu lassen, entsprechend einer Änderung des Blickwinkels ausgehend vom Zentrum. Beispielsweise könnte der Teilausschnitt dem normalen Sichtfeld einer Person am zweiten Ort entsprechen, so als wäre er am ersten Ort. Im Rahmen der Bildbereitstellung können insbesondere regular/angular Parameter eingesetzt werden.

In einer bevorzugten Ausgestaltung ist der Zugriff auf die Gesamtbilddaten am zweiten Ort und/oder ggf. an weiteren Orten begrenzt und bedarf einer vorherigen Freischaltung und/oder Autorisierung. Zugriffsrechte könnten vom ersten Ort aus, vom zweiten Ort aus und/oder einem dritten Ort gewährt werden. Bevorzugt ausgeschlossen jedenfalls im Rahmen der Übertragungen und Darstellungen in Echtzeit ist eine frei zugängliche Übertragung in freie Netzwerke, Internet oder öffentliche Netze, so dass nur ein begrenzter Personenkreis Zugriff hat.

In einer möglichen Ausgestaltung ist am zweiten Ort eine Überwachungseinrichtung mit automatischer Bilderkennung, insbesondere unterstützt durch künstliche Intelligenz vorgesehen, und/oder eine Kl mit zugewiesenem Aufgabenbereich. Eine solche Überwachungsvorrichtung könnte als Assistenzsystem insbesondere dann vorteilhaft zum Einsatz kommen, wenn das Gesamtbild den Ort einer Gefahrensituation abbildet, wie beispielsweise bei Bränden, nach Erdbeben, bei Überflutungen oder anderen Naturkatastrophen oder auch anderen Situationen, in denen beispielsweise Rettungskräfte, die Feuerwehr und/oder das Technische Hilfswerk ausrücken. In diesem Fall kann der zweite Ort eine insbesondere mobile Kommandozentrale sein.

In diesem Zusammenhang stellt die Erfindung auch bereit ein Sicherheitssystem zum Einsatz in Gefahrensituationen, mit einem Kommunikationssystem gemäß einem der vorgenannten Aspekte, bei dem der erste Ort der Gefahrenort der Gefahrensituation ist, der zweite Ort beispielsweise eine Einsatzzentrale ist und wenigstens eine Gerätschaft und/oder ein Fahrzeug des Sicherheitssystems zusammen mit oder zusätzlich zu den zum ersten Ort zugehörigen Komponenten des Kommunikationssystems am ersten Ort positioniert sind. Die die Anzeigefläche bildenden Wände (Frontwand, Seitenwände, Decke, Boden) könnten Innenwände eines nahe der Gefahrenzone aufgestellten Container(modul)s sein. Am Gefahrenort mag zunächst noch keine Übertragungsmöglichkeit gegeben sein. Die Erfindung sieht daher vor, gezielt am ersten Ort die Netzstruktur zu schaffen. Dies beinhaltet bevorzugt die Einrichtung eines den ersten Ort abdeckenden lokalen Netzes, etwa LTE, einschließlich Satellitenanbindung. Bevorzugt wird hierfür in diesem Ausführungsbeispiel aber auch sonst hinsichtlich SAT beinhaltenden Übertragungswegen auf MEO und/oder LEO Satelliten und digitale Übertragungstechnik zurückgegriffen und nicht auf das bekannte analoge tv/broadcast satellite Netzwerk. Als Frequenzbereich wird bevorzugt an das E-Band gedacht, oder nochmals niedrigere Wellenlängen.

Des Weiteren betrifft die Erfindung auch ein Lern- und/oder Trainingssystem, aufweisend ein Kommunikationssystem nach einem der vorgenannten Aspekte, bei dem der zweite Ort ein Schulungs- und/oder Trainingsort ist, und der erste Ort, an dem die dem ersten Ort zugehörigen Bestandteile der Kommunikationsvorrichtung positioniert sind, ein Ort ist, der Lern- und/oder Trainingsobjekte beinhaltet oder an dem Lern- und/oder Trainingshandlungen ausgeführt werden. Der zweite Ort kann hierzu auch dezentral gebildet sein, in dem Sinne dass neben dem zweiten Ort eine Mehrzahl zusätzlicher weiterer Orte vorgesehen sind, an denen die Raumdaten ebenfalls bereitgestellt werden.

Neben Lern- und/oder Schulungszwecken können auch Unterhaltungszwecke wie etwa Spielshows, Gewinnspielen oder vergleichbare Anwendungen auf das erfindungsgemäße Kommunikationssystem zurückgreifen, insbesondere wenn darin an einem Hauptaufzeichnungsort noch Einspielungen aus der Ferne stattfinden (die Ferne entspricht in diesem Fall dem ersten Ort) und/oder anderweitig eine räumliche Atmosphäre dargestellt wird. Insoweit betrifft die Erfindung anwendungstechnisch auch Entertainment-Systeme.

In einer besonders bevorzugten Gestaltung sind die erfindungsgemäß nicht mehr als 40 cm von dem gemeinsamen Zentrum entfernten Kameralinsen, weiter bevorzugt nicht mehr als 35 cm, insbesondere nicht mehr als 30 cm vom gemeinsamen Zentrum entfernt. Es wird jedoch bevorzugt auch an Ausgestaltungen gedacht, bei denen die Kameras von dem gemeinsamen Zentrum nicht mehr als 25 cm entfernt sind, insbesondere nicht mehr als 22 cm, selbst nicht mehr als 18 cm. Dies ergibt einen guten Kompromiss aus zufriedenstellender Bildqualität und physikalischer Optik.

In einer weiteren Ausgestaltung weist das Kommunikationssystem eine Speichereinrichtung zur Datenspeicherung auf. In einer besonders bevorzugten Ausgestaltung wird der Datenspeicher jedoch nicht für eine Zwischenspeicherung der generierten Einzelbilddaten und/oder daraus zusammengesetzten Gesamtbilddaten vor deren Übertragung eingesetzt, und bevorzugt ebenfalls nicht zur Zwischenspeicherung der Gesamtbilddaten vor ihrer Anzeige am zweiten Ort, sondern bevorzugt im Anschluss an deren Anzeige am zweiten Ort. Auf diese Weise kann Archivmaterial zu späteren Analysezwecken bereitgestellt werden. In diesem Zusammenhang ist insbesondere auch vorgesehen, dass die soeben erwähnten Zwischenspeicherungen vor Übertragung bzw. Anzeige der Gesamtbilddaten gar nicht erfolgt. Vorzugsweise erfolgt die Aufnahme, Synthese, Übertragung und Anzeige der Bilder (Bilddaten) in einem Fluss/Strom.

Weitere Merkmale, Einzelheiten und Vorteile der Erfindung ergeben sich aus der nachfolgenden Beschreibung mit Bezug auf die beigefügten Figuren, von denen
Fig. 1A in schematischer Weise einen Gefahrenort zeigt, an dem ein Teil eines Sicherheitssystems zum Einsatz kommt,
Fig. 1B in schematischer Weise einen anderen Ort zeigt, an dem ein anderer Teil des Sicherheitssystems zum Einsatz kommt,
Fig. 2 eine mobile Bildaufnahme- und Sendeeinheit zeigt,
Fig. 3 Kameras der Bildaufnahmeeinheit und ihr gemeinsames Zentrum zeigt,
Fig. 4A eine räumliche Anzeigefläche in aufgerissener Ansicht von oben zeigt, und
Fig. 4B diese Anzeigefläche in aufgerissener Ansicht von der Seite zeigt.

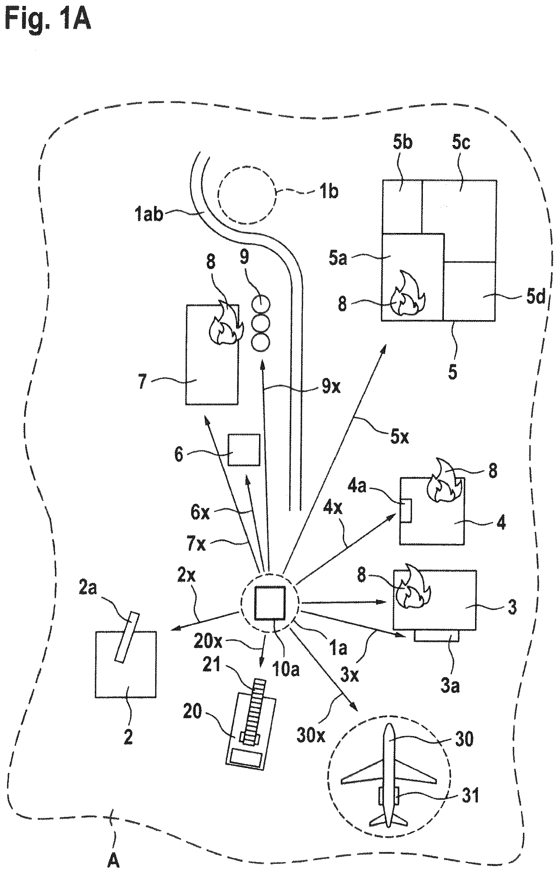

In der schematischen Darstellung von Fig. 1A ist ein Gefahrenort A dargestellt, an dem eine Gefahrensituation herrscht, die in diesem Beispielsfall in Form eines Großbrandes vorliegt, beispielsweise auf einem größeren Industriegelände, in dem chemische Industrie angesiedelt ist. Es versteht sich, dass die beispielhaften Darstellungen vereinfacht sind und zu Erläuterungszwecken von der komplexen Realität der tatsächlichen Gefahrensituation abweichen können.

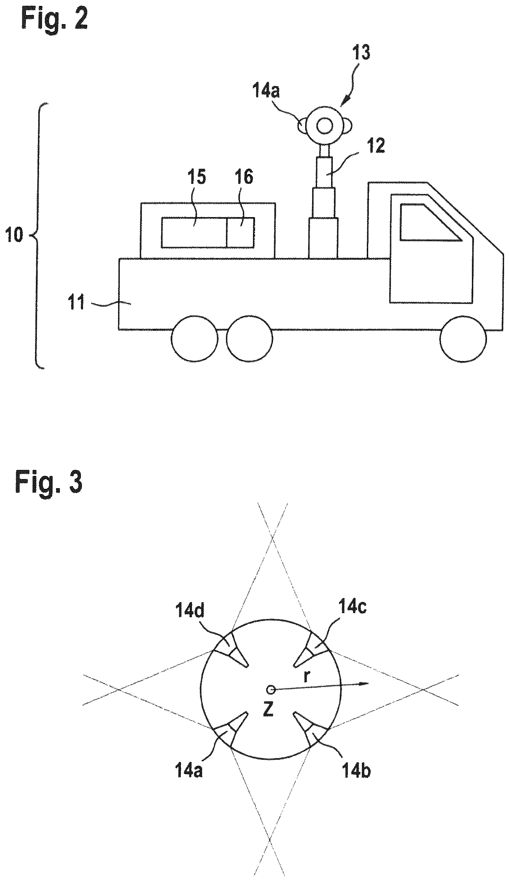

Dargestellt in Fig. 1A sind mehrere Gebäude 2, 3, 4, 5, 6, 7, von denen einige in Flammen stehen, was durch ein Feuersymbol 8 zum Ausdruck kommt. Den Einsatzkräften ist es gelungen, eine mobile Einheit 10a bis zur Stelle 1a am Gefahrenort A zu positionieren. In dem konkreten Beispiel handelt es sich bei der mobilen Einheit 10a um das in Fig. 2 dargestellte Fahrzeug 11, welches mit einer Bildaufnahmevorrichtung 13 und einer Datenübertragungsvorrichtung 15 sowie einer Bildsynthesevorrichtung 16 ausgestattet ist, die später mit Bezug auf Fig. 2 genauer erläutert werden. Insbesondere bei Gefahr für Leib und Leben an der Stelle 1a könnte es sich jedoch auch um ein autonom gesteuertes Fahrzeug im herkömmlichen Sinne oder um einen Roboter handeln, oder eine dorthin verbrachte Einheit ohne eigenes Fortbewegungsmittel.

Von der Aufstellungsstelle 1a hat die Bildaufnahmevorrichtung 13 der mobilen Einheit 10 aufgrund der mehreren Kameras 14a, 14b, 14c, 14d mit gemeinsamem Zentrum Z einen Raumwinkelbereich abgedeckt, der sich um einen Horizontalwinkelbereich (Papierebene von Fig. 1A in Polarkoordinaten) über 360° erstreckt. Im Blickfeld der Bildaufnahmevorrichtung 13 liegen somit nicht nur die Gebäude 2, 3, 4, 5, 6 und 7, was durch Blickrichtungspfeile 2x, 3x, 4x, 5x, 6x und 7x in Fig. 1A angedeutet ist, sondern auch die weitere Umgebung, insbesondere das Blickfeld nach vorne, symbolisiert durch Pfeil 9x etwa in Richtung auf einen weiter hinten gelegenen geeigneten Aufstellungsort 1b, zu dem die mobile Einheit 10a zu einem späteren Zeitpunkt vorzurücken beabsichtigt, oder auch eine zweite z.B. identische mobile Einheit 10b (nicht dargestellt) positioniert werden könnte.

Daneben hat eine der Kameras 14i mit Blickrichtung in Fig. 1A nach unten den Bereich hinter der mobilen Einheit 10a im Blick, angedeutet durch Pfeil 20x, wie auch eine bezüglich der Papierebene von Fig. 1A in Südostrichtung, wie mit dem Pfeil 30x angedeutet.

Die von den als Digitalkameras gestalteten Einzelkameras 14a, 14b, 14c und 14d aufgenommenen Einzelbilddaten werden von der Synthesevorrichtung 16 (Fig. 2) der mobilen Einheit 10 unmittelbar vor Ort zu Gesamtbilddaten zusammengesetzt, die in Azimutalrichtung in diesem Ausführungsbeispiel die vollen 360° betragen und im Vertikalbereich in diesem Ausführungsbeispiel auch die vollen 180°, wobei auch ein geringerer Bereich von beispielsweise 90°, von denen 65° oberhalb und 25° unterhalb der Horizontalen verteilt, grundsätzlich möglich wäre. Es versteht sich, dass auch bezüglich des Horizontalwinkelbereichs ein unterschiedlicher Bereich abgebildet werden könnte. Im Beispiel wird der volle Raumwinkelbereich von 4π abgedeckt, und in diesem gesamten Raum kann später an diesem oder anderen Orten navigiert werden.

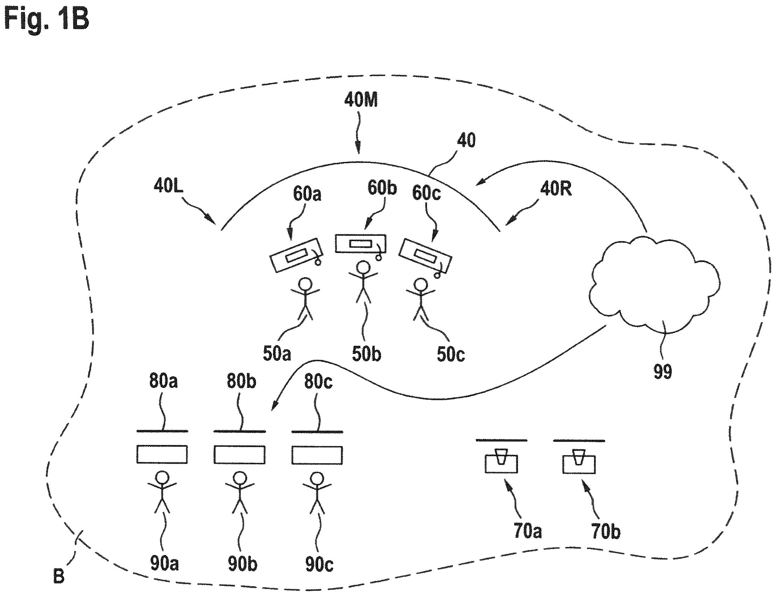

Die von der Synthesevorrichtung 16 gebildeten Gesamtbilddaten, deren Beschaffung unmittelbar nach Generierung der Einzelbilddaten erfolgt, wird nun in Echtzeit zum in Fig. 1B dargestellten Ort B übertragen, beispielsweise eine Einsatzzentrale der Rettungskräfte. Bei dem Ort B könnte es sich demnach um einen auch in sehr großer Entfernung vom Einsatzort A befindlichen Ort handeln, die Einsatzzentrale könnte jedoch z.B. auch eine mobile Einsatzzentrale sein und sich noch in ausreichender Sicherheitsentfernung vom Einsatzort A entfernt befinden.

Hierzu überwacht die Datenübertragungsvorrichtung 15 wiederkehrend, insbesondere fortlaufend die Datenübertragungskapazitäten auf verschiedenen auswählbaren Übertragungskanälen wie z.B. LTE, SAT, WLAN, LAN und wählt automatisch nach vorgegebenen Kriterien und/oder z.B. KI-gesteuert einen Übertragungskanal oder mehrere parallele Übertragungswege aus, der die für das auf den Moment folgende Zeitintervall den sichersten Übertragungsweg(e) darstellt und ausreichende Datenübertragungskapazitäten hat/haben. Ein bei der Auswahl herangezogener Parameter kann auch die für Übertragung zum Ort B erforderliche Übertragungszeit sein, bei ähnlichen Voraussetzungen werden kürzere Übertragungszeiten bevorzugt. Auch während der Datenübertragung findet die Überwachung der Übertragungsqualität fortlaufend statt, und die Datenübertragungsvorrichtung ist dazu gesteuert, bei einer unter ein vorgegebenes Level absinkenden Übertragungsqualität auf einen oder mehrere andere(n) Übertragungskanal/- kanäle zu wechseln.

Auf diese Weise steht am Empfangsort B, der über ein in Fig. 1B mit dem Bezugszeichen 99 versehendes Steuersystem verfügt, ein den Gesamtbilddaten entsprechendes Gesamtbild in Form eines digitalen Raums zur Verfügung, welches beispielsweise in wenigstens azimutal gestauchter Form auf einer räumlichen Anzeigefläche 40 mittels einer VR-Lichtprojektionstechnik wiedergegeben werden kann und wird.

Beispielsweise ist am linken Bildrand 40L der räumlichen Anzeige 40 die azimutale Blickrichtung gemäß der Aufnahmesituation (Fig. 1A) nach hinten (etwa Pfeil 20x) angezeigt, in der Mitte des Bildbereichs 40M der Azimutalbereich, der in Fig. 1A nach vorne gerichtet ist (etwa der Bereich zwischen den Pfeilen 7x und 5×, bis hin zum Randbereich 40R, in welchem wiederum der an den Bereich 40L anschließende Bereich in Richtung von Fig. 1A nach hinten dargestellt ist, wobei zur Vermeidung einer scharfen Übergangskante ein Überlappungsbereich von beispielsweise 20° dargestellt wird, so dass insgesamt auf dem Großbildschirm 40 eine 340° Aufnahme des gesamten azimutalen Winkelbereichs am Gefahrenort A in Echtzeit vorliegt. Wie oben bereits erläutert, wird zur Vermeidung von Orientierungsschwierigkeiten nicht die vollen 360°, sondern nur 360°-x angezeigt, hier ist x ca. 20°.

Bediener 50a, 50b und 50c (Fig. 1B) an jeweiligen Kontrollpulten 60a, 60b, 60c verfügen somit visuell über das Gesamtbild bzw. einen Gesamteindruck des Geschehens am Gefahrenort A, ohne sich am Gefahrenort A selbst zu befinden, von dem Raum, so wie er den vor Ort befindlichen Einsatzkräften bei Rundumblick erscheint. Im konkreten Beispielsfall erfolgt die Bilddarstellung an Anzeige 40 über einen (nicht gezeigten) Projektor, die Anzeige könnte jedoch aus einem oder mehreren aktiv wirkenden Großbildschirm(en) bekannter Technik gebildet sein.

Die Personen 50a, 50b und 50c können sodann den Einsatz am Gefahrenort A koordinieren. Beispielsweise können sie über ihr jeweiliges Eingabepult Bereiche auf der Anzeige 40 markieren, beispielsweise durch Einblendungen, etwa in Form einer blinkenden Umrandung. Unterstützt werden sie hierzu beispielsweise von Analyseeinheiten 70a, 70b, an denen im Wege automatischer Bilderkennung, die über Auswerteprogramme auch in Form künstlicher Intelligenz verfügt, Änderungen im Bilderfassungsbereich erkannt werden, oder durch Bildvergleich/-abgleich und/oder -analyse potentielle Gefahrensituationen erkannt werden.

Für die in Fig. 1A dargestellte Gefahrensituation werden etwa folgende Momente, insbesondere Gefahrenmomente erkannt:
Über Blickrichtungspfeil 20x nebst Entfernungsabschätzung wird erkannt, dass ein Rettungsfahrzeug 20 (dargestellt mit Rettungsleiter 21 in Fig. 1A) an dem Gefahrenort A bereits eingetroffen ist, so dass es einsatzbereit ist. Über Blickrichtung 5x wird erkannt, dass die Flammen zwar bereits auf Gebäudeteil 5a übergegriffen haben, jedoch Gebäudeteile 5b, 5c, 5d noch vor den Flammen rettbar erscheinen. Zudem ist über Informationsabgleich die Information verfügbar, dass in Gebäudeteil 5c Chemikalien lagern, deren Freisetzung durch Flammenübergriff auf diesen Gebäudeteil zu befürchten ist.

Zudem wird erkannt, dass auf einem Balkon 3a des Gebäudes 3 Personen versammelt sind, die Flammen 8 am Gebäude 3 jedoch erst an der dem Balkon 3a abgewandten Gebäudeseite ausgebreitet sind. Auch wird durch Bewegungserkennung in Blickrichtung 4x festgestellt, dass sich hinter einem Fenster 4a des ebenfalls bereits in Flammen stehenden Gebäudes 8 vermutlich noch Personen aufhalten.

In dieser Situation weisen die Koordinatoren 50a, 50b und 50c sich z. B. zunächst jeweilige Verantwortungsbereiche zu. Zudem können über Einzelbildschirme 80a, 80b, 80c, etwa in Form von Tablets, Individualbeobachter 90a, 90b, 90c mit der Überwachung einzelner Raumwinkelabschnittsbereiche beauftragt werden, beispielsweise erhält Individualbeobachter 90b den Auftrag zur Überwachung des in Fig. 1A zwischen den Beobachtungspfeilen 6x und 5x liegenden Azimutalbereichs.

In dieser Situation könnte beispielsweise Einsatzfahrzeug 20 den Einsatzbefehl erhalten, entlang des Verbindungswegs 1ab in Richtung auf das Gebäude 5 vorzurücken, und/oder ein (nicht dargestelltes) weiteres mobiles Einsatzfahrzeug 10b, das ähnlich wie die mobile Einheit 10a gestaltet ist, den Auftrag, zur Aufstellungsstelle 1b vorzurücken.

Nun erkennt Invidualbeobachter 90b, alleine oder ggf. unterstützt durch die Auswerteeinheiten 70a oder 70b, dass sich in Blickrichtung 9x Gefahrgutcontainer 9 mit explosivem Material in einem Bereich aufhalten, in dem Flammen 8 aus Gebäude 7 ausschlagen und eine Explosion der Behälter 9 zu befürchten steht. Aufgrund der Echtzeitübertragung kann von der Einsatzzentrale am Ort B noch eine rechtzeitige Warnung an das sich den Gefahrenbehältern 9 näherndes Einsatzfahrzeug 20 abgegeben werden. Die Einsatzzentrale an dem vom Gefahrenort A fernen Einsatzzentralenort B kann somit in Echtzeit nicht nur hinsichtlich dieser einen Blickrichtung, sondern auch den anderen Blickrichtungen bis hin zu 360° reagieren.

Im konkreten Fall würde dem Einsatzfahrzeug 20 ein akustisches Warn- und Stoppsignal übermittelt. In anderen denkbaren Situationen, in denen die Gefahrennatur der Behälter 9 nicht ohne Weiteres offensichtlich aber möglich erscheint, könnte ein Bildausschnitt, beispielsweise der Bildausschnitt, über den Individualbeobachter 90b an Bildschirm 80b verfügt, nach entsprechender Feedbackinformation auf einem Bildschirm im Einsatzfahrzeug 20 aufgerufen und die potentielle Gefahrenstelle markiert werden, woraufhin das weitere Handeln den Einsatzkräften im Einsatzfahrzeug 20 vor Ort überlassen bliebe.

Im vorliegenden Fall würde, die Einsatzzentrale am Ort B, da sie über rückwärts himmelwärts gerichteten Blickwinkel 30x zufällig zeitgleich bereits über die Information verfügen, dass ein Löschflugzeug 30 mit Löschwasserbehältern 31 bereits im Anflug ist (in Fig. 1A in der Südostecke bereits eingezeichnet, jedoch nicht in Realentfernung), das Löschflugzeug 30 für Wasserabwurf über Gebäudeteil 5a bzw. Gebäude 5 beauftragen, wohingegen das Einsatzfahrzeug 20 einen Rückrufbefehl erhält und einen neuen Einsatzbefehl zur Rettung der Personen hinter Fenster 4a in Gebäude 4 oder auf Balkon 3a in Gebäude 3, je nach Detaileinschätzung beispielsweise des Individualbeobachters 90c, der diese Gebäude 3 und 4 in einem entsprechenden Raumwinkelabschnitt im Blickfeld behält.

Individualbeobachter 90a hat mittlerweile beispielsweise geprüft, dass in Gebäude 6 weder Rettungsmaßnahmen noch Sicherstellungsmaßnahmen vorzunehmen sind, und überprüft daraufhin mit Blickrichtung Westen (Pfeil 2x) Gebäude 2. Hier wird, ggf. durch Unterstützung der Bildauswerte- und -analyseeinheiten 70 erkannt, dass ein Betreten des Gebäudes 2 zu Überprüfungszwecken nicht zugelassen wird, da Einsturzgefahr aufgrund der Beschädigung durch die Flammen besteht, symbolisiert durch einen in Fig. 1A schrägstehenden Dachbalken 2a.

Wie anhand dieses Ausführungsbeispiels für einen konkreten Einzelfall dargestellt wurde, bildet das erfindungsgemäße bidirektionale Kommunikationssystem in Echtzeit einen wesentlichen Bestandteil eines Sicherheitssystems zur Begegnung von Gefahrensituationen.

Es versteht sich, dass der Einsatz eines solchen Sicherheitssystems nicht auf Einsätze für Großbrände eingeschränkt ist. Beispielsweise könnten Gefahren oder Katastrophensituationen auch in anderen Bereichen vorliegen. So könnte das System etwa im Falle eines Erdbebens an von Erdbeben betroffenen Orten eingesetzt werden, mit Gefahrensituationen hinsichtlich einsturzgefährdeter Gebäude und Rettungssituationen im Hinblick auf die Bergung von Verschütteten. Ebenfalls sind Einsätze im Falle von Überflutungen denkbar, in welchem Fall die mobile Bildaufnahme- und -übertragungseinheit auf einem Boot angeordnet werden kann, und in Fällen, in denen eine Annäherung an einen Einsatzort zu Wasser oder zu Lande erschwert oder unmöglich ist, ist auch daran gedacht, die mobile Bildaufnahme- und -übertragungseinheit an ein Fahrzeug zu Luft, wie etwa einen Hubschrauber zu koppeln. In diesem Falle würde der erfasste Vertikalwinkelbereich π umfassen und müsste die Horizontale (π/2) nicht mehr unbedingt umfassen.

Einzelbilddatenströme von den einzelnen Kameras 14a bis 14d der Bildaufnahmevorrichtung 13 werden der Synthesevorrichtung 16 synchronisiert zugeleitet und aus diesen von der Synthesevorrichtung Gesamtbilddaten erzeugt. Hierzu greift die Synthesevorrichtung für Raumwinkelbereiche, die nur von einer der Kameras 14i abgedeckt werden, auf die Einzelbilddaten zurück, für Raumwinkelbereiche, in denen Einzelbilddaten von wenigstens zwei Kameras 14i, j vorliegen, werden unter Bildung von definierten Übergangsbereichen jeweilige anteilige Einzelbilddaten herangezogen, um daraus diesen Raumwinkelbereich abdeckende Gesamtbildteildaten zu erzeugen. Zur Verbesserung der Echtzeitübertragung erfolgt vor der Übertragung kein zwischenzeitliches Abspeichern, die Einzelbilddaten werden de facto im Fluss zusammengesetzt und die Gesamtbilddaten im Fluss über die Datenübertragungsvorrichtung 15 zum anderen Ort B übertragen, z.B. mittels LTE. Bei nicht ausreichender Bandbreite wird zusätzlich noch eine Satellitenverbindung genutzt.

Für die Übertragung wird somit, wie weiter oben bereits ausführlich erläutert, ein Übertragungsweg ausgesucht, der für eine stabile Datenübertragung in Echtzeit am vielversprechendsten erscheint, ggf. auch mehrere Kanäle parallel. Dies erfolgt unter Überprüfung von erreichbaren Datenübertragungsraten und ggf. Ausfallsicherheit des Übertragungswegs. Im konkreten Ausführungsbeispiel erfolgt die Datenübertragung mit einer Übertragungsrate von wenigstens 40 Mbit/s.

Die in Fig. 2 dargestellte Bildaufnahmevorrichtung 13 weist in diesem Ausführungsbeispiel vier Kameras in einer lokalen Äquatorebene auf, mit gemeinsamem Zentrum Z wie in Fig. 3 dargestellt. Es versteht sich, dass auch eine andere Anzahl von Kameras herangezogen werden könnte, wenigstens zwei, dann diametral gegenüberliegende Kameras sind jedoch erfindungsgemäß erforderlich. Es könnten auch z. B. Sechs-Kamerasysteme oder Acht-Kamerasysteme herangezogen werden.

Die mit Bezug auf Fig. 1B beschriebene Einsatzzentrale könnte selbst auch mobil sein, insbesondere aufbaubereit in einem oder mehreren Fahrzeugen, z.B. Trucks, verfügbar sein. Auch sind Kombinationen aus einer festen und wenigstens einer mobilen Einsatzzentrale denkbar, woraufhin die Datenübertragung von der Datenübertragungsvorrichtung 15 sowohl zu der mobilen als auch der festen Einsatzzentrale erfolgen können.

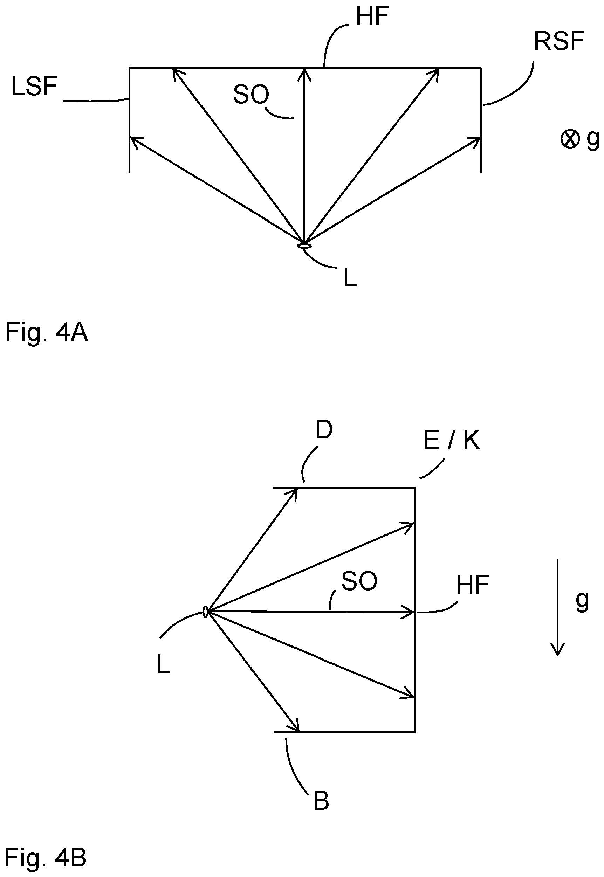

In den Figuren 4A,4B ist noch ein weiteres Ausführungsbeispiel einer räumlichen Anzeigefläche gebildet. Sie setzt sich aus einer Hauptfläche HF (Frontalwand), einer rechten Seitenfläche RSF, einer linken Seitenfläche LSF zusammen, welche z.B. Innenwände (bzw. Teilbereiche selbiger) eines Gebäuderaums, auch etwa eines Containers sein können, weiter aus angrenzenden Bereichen des Bodens B und der Decke D. Diese Decke/Boden können durch die Raumdecke und den Fußboden des Gebäudes/Containers gebildet sein (hell/weiß gestrichen oder beschichtet), oder abgehängte Flächen/Sockelstrukturen. Die Seitenflächen könnten auch Stellwände oder seitliche Leinwände sein. Der Lichtprojektor (dargestellt ist nur dessen Linse L) wird bevorzugt zentral in einem Abstand von der Hauptfläche angeordnet, die im wesentlichen der Lichtlaufstrecke eines zentralen Lichtstrahles S0 entspricht. Die oben beschriebene erste Erstreckungsrichtung könnte etwa der Verlauf (LSF,HF,RSF) der Anzeigefläche in der in Fig.4A dargestellten Ebene sein (Horizontalebene), die zweite Erstreckungsrichtung Verlauf (B,HF,D) der Anzeigefläche in der in Fig.4B dargestellten Ebene sein (Vertikalebene orthogonal zum Vektorprodukt von g uns S0). Der Projektor könnte auch z.B.weiter entfernt oder näher aufgestellt werden als in Fig. 4 gezeigt. Dann würde durch Neukalibrierung, etwa Neueinstellung der Kalibrierlinien und -ecken auf die Kanten K zwischen den Wandbereichen und die Ecken E der Anzeigefläche, die Bilddarstellung von der bildgebenden Steuereinheit an die neuen Verhältnisse angepasst.

Die Datenübertragung kann auf gesicherten Kanälen erfolgen, und/oder in verschlüsselter Form. Jedenfalls sind Schutzmechanismen vorgesehen, die Zugriffsmöglichkeiten einschränken. Positiv ausgedrückt, bestehen Zugriffsrechte nur, wenn von einer Zugriffszuteilungseinrichtung gewährt. Zugriffsrechte können sowohl räumlich als auch zeitlich partiell gewährt, aber auch wieder entzogen werden.

Die aufgenommenen Einzelbilddaten und/oder die Gesamtbilddaten können auch gespeichert werden. Es wird jedoch bevorzugt, dass eine Speicherung erst im Anschluss an die erfolgte Übertragung vom ersten Ort zum zweiten Ort und Wiedergabe am zweiten Ort erfolgt.

Auch Rückübertragungen bzw. Datenübertragungen vom zweiten Ort zurück zum ersten Ort sind vorgesehen und können aufgezeichnet werden, bevorzugt jedoch auch erst nach erfolgter Rückübertragung und insbesondere auch Wiedergabe.

Zur Sicherstellung einer möglichst zeitverzögerungsverminderten Übertragung der Echtzeitübertragungen insbesondere bei Live Anwendungen werden über die Übertragungskanal-Auswahlmöglichkeit für eine ausreichende Bandbreite der Übertragung gesorgt, während die Synthesevorrichtung die Gesamtbilddaten insbesondere in Abhängigkeit der verfügbaren Bandbreite erstellt, sowie in ausreichend kurzer Zeit.

Auch anderen Einsatzmöglichkeiten des erfindungsgemäßen insbesondere bidirektionalen Kommunikationssystems sind denkbar, beispielsweise in Form von Trainings- und/oder Lernsystemen.

So ist denkbar, dass die oben ausführlich anhand von Fig. 1A dargestellte reale Gefahrensituation lediglich simuliert wird, etwa auf einem Übungsplatz. Der erste Ort wäre dann z.B. ein Übungsplatz. Die Übertragung der Datenübertragungsvorrichtung 15 könnte dann an ein Schulungszentrum gerichtet werden, das gleich oder ähnlich der in Fig. 1B beschriebenen Einsatzzentrale gestaltbar ist.

So hat auch das Schulungszentrum bevorzugt eine Anzeige, auf denen ein 340° Anteil des in Azimutalrichtung gesehen verfügbaren 360° Gesamtbilds darstellbar ist. Des Weiteren wird an Einzel-Terminals gedacht, in denen ein Raumwinkelabschnittsbereich einstellbarer Größe bis hin zum nahezu gesamten oder gesamten Raumwinkelbereich der übertragenen Gesamtbilddaten im Wege einer Zoom-Funktion auswählbar ist. Die Gesamtbilddaten sind hierzu verfügbar hinterlegt, so dass auch bei Darstellung nur eines Teilbildbereichs durch Ausführung einer Blickwinkeländerungsfunktion die auf dem Bildschirm dargestellte Abbildung von einem Bereich zu einem nächsten weiterschwenken kann, simulierend einen Blickrichtungswechsel oder einem Verdrehen des Kopfes des Betrachters entsprechend, z.B. im Wege eines einer verschwenkten Darstellung des angezeigten Teilbildes. Derartige Darstellungsweisen sind per se beispielsweise aus der Computerspielbranche bekannt und entsprechende Techniken können zum Einsatz kommen, wobei die Gesamtbilddaten keine virtuelle Realität widerspiegeln, sondern in Echtzeit übertragene Realbilder. Damit verfügt der auf den Bildschirm blickende Beobachter über Zugriffsmöglichkeit auf das Gesamtbild (bis hin zum gesamten Raum am ersten Ort).

In diesem Zusammenhang ist auch denkbar, dass am zweiten Ort, etwa einem Schulungszentrum, nicht nur Gesamtbilddaten von dem ersten Ort in Echtzeit übertragen werden, sondern die Bilddarstellung am zweiten Ort, insbesondere auf der Gesamtanzeige, zwischenzeitlich auch aus anderen Bilddatenquellen gespeist werden, beispielsweise auch von anderen Orten wie etwa einem dritten oder einem vierten Ort, bevorzugt ebenfalls von dort positionierten Bildaufnahme- und Datenübertragungseinrichtungen mit entsprechend großen Raumwinkelbereichen wie zuvor erläutert.

Vom zweiten Ort können wiederum im Wege der bidirektionalen Kommunikation in ähnlicher Weise wie zum ersten Ausführungsbeispiel erläutert, Kommunikationen vom zweiten Ort zum ersten Ort zurück stattfinden. Diese Kommunikation kann sich in Echtzeit auf die aktuell dargestellten Gesamtbilddaten (oder den entsprechenden Gesamtbilddatenausschnitt) beziehen und in Form einer Rückfrage oder eines Feedbacks vorliegen. Anders als bei der oben erläuterten Darstellung einer konkreten Gefahrensituation erfolgt das Feedback vom zweiten Ort zum ersten Ort somit weniger in Form von Warnhinweisen oder Einsatzbefehlen, sondern in Form von in Abhängigkeit der Gesamtbilddaten gebildeten Anfragen nach zusätzlichen Informationen. Diese können im Wege einer Feedback-Steuerung auch zu einer Veränderung der Gesamtbilddaten wie übertragen führen, und zu einer Änderung und/oder Einführung zusätzlicher Synchron- und zeitgleich zu den Gesamtbilddaten bereitgestellten Zusatzdaten, und/oder der Bereitstellung weiterer Daten vom ersten Ort. Die Zusatzdaten und/oder weiteren zur Verfügung gestellten Daten vom ersten Ort können in Form modifizierter Bilddaten, zusätzlicher Bilddaten, etwa in Form einer Einblendung, oder auch in Form von Audiodaten erfolgen.

In einer Abwandlung dieses zweiten Ausführungsbeispiels ist auch vorgesehen, dass die am zweiten Ort aufgrund der Übertragung vom ersten Ort zur Verfügung stehenden Gesamtbilddaten an dezentrale Zweigorte des zweiten Orts weitergeleitet oder unmittelbar vom ersten Ort dorthin geleitet werden. So kann das Lern- und/oder Trainingssystem auch dezentral genutzt werden, wenn eine Anwesenheit des Teilnehmers am zweiten Ort selbst nicht möglich oder nicht gewünscht ist. In diesem Fall erfolgt eine entsprechende Zugriffsrechteregelung, bevorzugt vom ersten Ort und/oder vom zweiten Ort aus.

In einem weiteren Ausführungsbeispiel kann ebenfalls daran gedacht werden, dass ein zentraler zweiter Ort, insbesondere eine großflächige Anzeige und/oder Projektion mittels VR-Beamer dort gar nicht mehr zum Einsatz kommt, sondern nur dezentrale Empfangsstellen 2, an denen die Gesamtbilddaten in Echtzeit mit Reaktionsmöglichkeit, bevorzugt ebenfalls auch in Echtzeit, zur Verfügung stehen. Die Zugriffsregelungen für die übertragenen Gesamtbilddaten können sich von den Freigaberegelungen für die Rückkommunikation zum ersten Ort unterscheiden.

## Patentansprüche

1. Kommunikationssystem, mit
einer an einem ersten Ort (A) Bilder aufnehmende und daraus Bilddaten generierenden Bildaufnahmevorrichtung (14),
einer die generierten Bilddaten von dem ersten Ort über wenigstens einen Übertragungsweg zu einem von dem ersten Ort fernen zweiten Ort (B) übertragenden Datenübertragungsvorrichtung (15),
einer die übertragenen Bilddaten am zweiten Ort empfangenden ersten Empfangsvorrichtung (99), sowie
**dadurch gekennzeichnet, dass** der wenigstens eine Übertragungsweg ein aus einer Mehrzahl von auswählbaren Übertragungswegen ausgewählter Übertragungsweg ist und die am zweiten Ort vorliegenden Bilddaten in Echtzeit zum zweiten Ort übertragene, von einer Bildsynthesevorrichtung (16) aus wenigstens zwei von jeweils einer von wenigstens zwei Kameras der Bildaufnahmevorrichtung zum gleichen Zeitpunkt generierten Einzelbilddaten synchronisiert zusammengesetzte und das Bild eines bezüglich eines gemeinsamen Zentrums (Z) der wenigstens zwei die Einzelbilddaten generierenden Kameras (14i) durch einen auf die Schwererichtung bezogenen Horizontalwinkelbereich (Δϕ) von wenigstens 7π/6 sowie einen insbesondere die Horizontale (rr/2) umfassenden Vertikalwinkelbereich (Δϑ) von wenigstens rr/3 aufgespannten Raumwinkelbereich (Ω_{g}) darstellende Gesamtbilddaten sind, wobei die radial äußerste Linse der jeweiligen Kamera nicht weiter als 40 cm von dem gemeinsamen Zentrum entfernt (r) ist.

2. Kommunikationssystem nach Anspruch 1, bei dem die Bildsynthesevorrichtung zwischen der Bildaufnahmevorrichtung und der Datenübertragungsvorrichtung zwischengeschaltet ist, und die übertragenden Daten die Gesamtbilddaten sind.

3. Kommunikationssystem nach Anspruch 1 oder 2, mit einer zum Empfangen eines Feedback-Signals am ersten Ort vorgesehenen zweiten Empfangsvorrichtung, wobei insbesondere das Feedback-Signal ein in Abhängigkeit von wenigstens einem Teilbild der übertragenen Gesamtbilddaten entstandenes und insbesondere weiterhin in Echtzeit gesandtes Signal ist.

4. Kommunikationssystem nach einem der vorhergehenden Ansprüche, bei dem die Mehrzahl von auswählbaren Übertragungswegen wenigstens zwei aus der Gruppe LTE, SAT, WLAN, LAN und Festnetzleitung umfasst.

5. Kommunikationssystem nach einem der vorhergehenden Ansprüche, **dadurch gekennzeichnet, dass** es für Live-Übertragungen und/oder Pre-Live-Übertragungen befähigt ist.

6. Kommunikationssystem nach einem der vorhergehenden Ansprüche, mit einem Projektor zur Anzeige wenigstens eines Teilbilds des von den Gesamtbilddaten aufgespannten Gesamtraums auf einer Anzeigefläche.

7. Kommunikationssystem nach Anspruch 6, mit einer VR-Projektionstechnik und insbesondere einer räumlichen Anzeigefläche.

8. Kommunikationssystem nach einem der vorherigen Ansprüche, mit einem, insbesondere mehreren Kleinbildschirmen, auf denen wenigstens ein Teilbild des den Gesamtbilddaten entsprechenden Gesamtbilds anzeigbar ist, insbesondere in Form von Tablets.

9. Kommunikationssystem nach einem der vorhergehenden Ansprüche, mit einer Bildausschnittsauswahlfunktion, einer Zoom-Funktion und/oder einer Blickwinkeländerungsoption für die am zweiten Ort angezeigten Darstellungen.

10. Kommunikationssystem nach einem der vorhergehenden Ansprüche, mit einer Erfassungseinrichtung zum Erfassen der aktuellen und/oder aktuell erreichbaren Übertragungsraten, und insbesondere einer Ansteuerung der Bildsynthesevorrichtung in Abhängigkeit der von der Erfassungseinrichtung signalisierten Übertragungsraten.

11. Kommunikationssystem nach einem der vorhergehenden Ansprüche, mit einer Umschaltvorrichtung, mittels der zwischen einer ersten Betriebsart einer kontinuierlichen Bilddatenübertragung und einer zweiten Betriebsart mit diskontinuierlichen Bilddaten mit insbesondere einstellbarem Zeitintervall umschaltbar ist.

12. Kommunikationssystem nach Anspruch 11, bei dem die Umschalteinrichtung wenigstens in einem Betriebsmodus insbesondere automatisch in Abhängigkeit der von der Erfassungseinrichtung signalisierten Übertragungsraten gesteuert ist.

13. Sicherheitssystem zum Einsatz in Gefahrensituationen, mit einem Kommunikationssystem nach einem der vorhergehenden Ansprüche, bei dem der erste Ort der Gefahrenort der Gefahrensituation ist.

14. Lern- und/oder Trainingssystem, aufweisend ein Kommunikationssystem nach einem der Ansprüche 1 bis 12, bei dem der zweite Ort ein Schulungs- und/oder Trainingsort ist, und der erste Ort, an den die dem ersten Ort zugehörigen Bestandteile des Kommunikationssystems positioniert sind, ein Ort ist, der Lern- und/oder Trainingsobjekte beinhaltet und/oder an dem Lern- und/oder Trainingshandlungen ausgeführt werden.

15. Verfahren der Kommunikation zwischen einem ersten Ort zu einem von dem ersten Ort fernen zweiten Ort unter Verwendung eines Kommunikationssystems nach einem der Ansprüche 1 bis 12, mit insbesondere eines in Abhängigkeit wenigstens eines Teilbilds aus dem mittels des Kommunikationssystems zum zweiten Ort übertragenen digitalen Raums getätigten Feedback vom zweiten Ort zum ersten Ort.

## Claims

1. A communications system, comprising
an image recording apparatus (14) recording images at a first location (A) and generating image data therefrom,
a data transmission apparatus (15) transmitting the generated image data from the first location via at least one transmission path to a second location (B) remote from the first location,
a first receiver apparatus (99) receiving the transmitted image data at the second location, and
**characterized in that** the at least one transmission path is a transmission path selected from a plurality of selectable transmission paths and the image data present at the second location are overall image data, which are transmitted to the second location in real time, stitched in synchronized fashion by an image synthesis apparatus (16) from at least two frame data generated at the same time by in each case one of at least two cameras of the image recording apparatus, and represent the image of a solid angle region (Ω_{g}) spanned with respect to a common center (Z) of the at least two cameras (14i) that generate the frame data by a horizontal angle range (Δϕ), related to the direction of gravity, of at least 7π/6 and a vertical angle range (Δϑ), comprising the horizontal (π/2) in particular, of at least π/3. with the radially outermost lens of the respective camera having a distance (r) from the common center of no more than 40 cm.

2. The communications system as claimed in claim 1, wherein the image synthesis apparatus is interposed between the image recording apparatus and the data transmission apparatus, and the transmitted data are the overall image data.

3. The communications system as claimed in claim 1 or 2, comprising a second receiver apparatus provided for receiving a feedback signal at the first location, with in particular the feedback signal being a signal which has arisen on the basis of at least one partial image from the transmitted overall image data and in particular further being a signal sent in real time.

4. The communications system as claimed in any of the preceding claims, wherein the plurality of selectable transmission paths comprise at least two from the following group: LTE, SAT, WLAN, LAN, and landline.

5. The communications system as claimed in any of the preceding claims, **characterized in that** it is capable of live transmissions and/or pre-live transmissions.

6. The communications system as claimed in any of the preceding claims, comprising a projector for displaying, on a display area, at least a partial image of the overall space spanned by the overall image data.

7. The communications system as claimed in claim 6, comprising VR projection technology and in particular a spatial display area.

8. The communications system as claimed in any of the preceding claims, comprising a small electronic visual display, in particular a plurality of small electronic visual displays, in particular in the form of tablets, on which at least a partial image of the overall image corresponding to the overall image data is displayable.

9. The communications system as claimed in any of the preceding claims, comprising an image portion selection function, a zoom function, and/or a viewing angle change option for the representations displayed at the second location.

10. The communications system as claimed in any of the preceding claims, comprising a sensing device for sensing the current and/or currently achievable transmission rates, and in particular a control of the image synthesis apparatus on the basis of the transmission rates signaled by the sensing device.

11. The communications system as claimed in any of the preceding claims, comprising a switch-over apparatus, by means of which it is possible to switchover between a first mode of operation of continuous image data transmission and a second mode of operation with discontinuous image data with an adjustable time interval in particular.

12. The communications system as claimed in claim 11, wherein the switch-over device is controlled, in particular automatically, on the basis of the transmission rates signaled by the sensing device, at least in one mode of operation

13. A safety system for use in hazardous situations, comprising a communications system as claimed in any of the preceding claims, wherein the first location is the location of the hazard in the hazardous situation.

14. A learning and/or training system, comprising a communications system as claimed in any of claims 1 to 12, wherein the second location is a teaching and/or training location and the first location, at which the constituent parts of the communications system associated with the first location are positioned, is a location containing learning and/or training objects and/or at which learning and/or training actions are performed.

15. A method of communicating between a first location and a second location remote from the first location using a communications system as claimed in any of claims 1 to 12, comprising in particular a feedback from the second location to the first location, provided on the basis of at least a partial image from the digital space transmitted to the second location by means of the communications system.

## Revendications

1. Système de communication comportant :
un dispositif de prise d'images (14) qui prend des images en un premier emplacement (A) et génère des données d'image à partir de celles-ci,
un dispositif de transmission de données (15) qui transmet les données d'image générées depuis le premier emplacement, selon au moins une voie de transmission, auprès d'un deuxième emplacement (B) éloigné du premier emplacement,
un premier dispositif de réception (99) qui reçoit, au deuxième emplacement, lesdites données d'image transmises, et
**caractérisé en ce que** l'au moins une voie de transmission est une voie de transmission sélectionnée parmi une pluralité de voies de transmission sélectionnables, et les données d'image présentes au deuxième emplacement sont des données d'image globale qui sont transmises en temps réel auprès du deuxième emplacement, qui ont été composées de manière synchronisée par un dispositif de synthèse d'images (16) à partir d'au moins deux données de trame individuelle générées chacune simultanément par une d'au moins deux caméras du dispositif de prise d'image, et qui représentent l'image d'une zone angulaire spatiale (Ω_{g}) définie par une zone angulaire horizontale (Δcp), eu égard au sens de la gravité, d'au moins 7π/6 et par une zone angulaire verticale (Δϑ), qui comprend notamment l'horizontale (π/2), d'au moins π/3, eu égard à un centre commun (Z) des au moins deux caméras (14i) ; la lentille de chaque caméra qui est située le plus extérieurement n'étant pas éloignée (r) de plus de 40 cm du centre commun.

2. Système de communication selon la revendication 1, dans lequel le dispositif de synthèse d'images est interposé entre le dispositif de prise d'images et le dispositif de transmission de données, et les données transmises sont les données d'image globale.

3. Système de communication selon la revendication 1 ou 2, comportant un deuxième dispositif de réception prévu au premier endroit pour recevoir un signal de rétroaction, ledit signal de rétroaction étant notamment un signal créé en fonction d'au moins une image partielle des données d'image globale transmises et notamment en outre envoyé en temps réel.

4. Système de communication selon l'une des revendications précédentes, dans lequel la pluralité de voies de transmission sélectionnables comprend au moins deux possibilités issues du groupe suivant : LTE, SAT, WLAN, LAN et ligne de réseau fixe.

5. Système de communication selon l'une des revendications précédentes, **caractérisé en ce qu'**il est capable d'émettre en direct et/ou en pré-direct.

6. Système de communication selon l'une des revendications précédentes, comportant un projecteur permettant d'afficher sur une surface d'affichage au moins une image partielle de l'espace global défini par les données d'image globale.

7. Système de communication selon la revendication 6, comportant une technologie de projection VR et notamment une zone d'affichage volumique.

8. Système de communication selon l'une des revendications précédentes, comportant un et notamment plusieurs petits écrans notamment sous la forme de tablettes, permettant l'affichage d'au moins une image partielle de l'image globale correspondant aux données d'image globale.

9. Système de communication selon l'une des revendications précédentes, comportant une fonction de sélection de cadrage, une fonction de zoom et/ou une option de changement d'angle de vue pour les représentations affichées au deuxième emplacement.

10. Système de communication selon l'une des revendications précédentes, comportant un dispositif de détection des débits de transmission actuels et/ou actuellement réalisables, ainsi notamment qu'un dispositif de pilotage du dispositif de synthèse d'images en fonction des débits de transmission signalés par le dispositif de détection.

11. Système de communication selon l'une des revendications précédentes, comportant un dispositif de commutation, grâce auquel il est possible de basculer entre un premier mode de fonctionnement à transmission continue de données d'images et un deuxième mode de fonctionnement à données d'images discontinues offrant notamment un intervalle de temps réglable.

12. Système de communication selon la revendication 11, dans lequel le dispositif de commutation, au moins dans un mode de fonctionnement, est commandé de manière notamment automatique en fonction des débits de transmission signalés par le dispositif de détection.

13. Système de sécurité destiné à être utilisé dans des situations dangereuses, comportant un système de communication selon l'une des revendications précédentes dans lequel le premier emplacement est l'emplacement dangereux de ladite situation dangereuse.

14. Système d'apprentissage et/ou de formation, présentant un système de communication selon l'une des revendications 1 à 12 dans lequel le deuxième emplacement est un lieu d'entraînement et/ou d'apprentissage, et le premier emplacement auquel sont mis en place les composants du système de communication associés au premier emplacement est un lieu qui contient des objets d'apprentissage et/ou de formation et/ou un lieu dans lequel sont réalisées des activités d'apprentissage et/ou de formation.

15. Procédé de communication entre un premier emplacement et un deuxième emplacement éloigné du premier emplacement à l'aide d'un système de communication selon l'une des revendications 1 à 12, offrant notamment une rétroaction, depuis le deuxième emplacement vers le premier emplacement, qui est exécutée en fonction d'au moins une image partielle de l'espace numérique transmis au deuxième emplacement au moyen dudit système de communication.
